(19) 

Europäisches
Patentamt
European
Patent Office
Office européen
des brevets

(11) **EP 3 543 327 A1**

(12) **EUROPEAN PATENT APPLICATION**
published in accordance with Art. 153(4) EPC

(43) Date of publication:
**25.09.2019 Bulletin 2019/39**

(21) Application number: **17871805.2**

(22) Date of filing: **08.11.2017**

(51) Int Cl.:
*C12G 3/04* (2019.01)     *A23L 2/00* (2006.01)
*C12C 5/02* (2006.01)

(86) International application number:
**PCT/JP2017/040251**

(87) International publication number:
**WO 2018/092655 (24.05.2018 Gazette 2018/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.11.2016 JP 2016226052**

(71) Applicants:
• **Asahi Group Holdings, Ltd.**
**Tokyo 130-8602 (JP)**
• **Asahi Breweries, Ltd.**
**Tokyo 130-8602 (JP)**

(72) Inventors:
• **OHASHI, Takuya**
**Moriya-shi**
**Ibaraki 302-0106 (JP)**
• **TAKISHITA, Seiichi**
**Moriya-shi**
**Ibaraki 302-0106 (JP)**
• **NISHIZUKA, Taichi**
**Moriya-shi**
**Ibaraki 302-0106 (JP)**

(74) Representative: **Müller-Boré & Partner**
**Patentanwälte PartG mbB**
**Friedenheimer Brücke 21**
**80639 München (DE)**

(54) **BEER-LIKE ALCOHOLIC BEVERAGE**

(57)     The problem of the invention is to provide a beer-like alcoholic beverage with a reduced amount of digestible-carbohydrates, a reduced sensation of alcohol stimulation, and an excellent balance of beer-like flavors. The means for solving the problem is a beer-like alcoholic beverage wherein the amount of 4-vinyl guaiacol (4VG) is 10-200 ppb (w/v) in concentration, the amount of 2-acetyl-1-pyrroline (2AP) is less than 1 ppb (w/v) in concentration, the amount of digestible-carbohydrates is 2.0 g/100 mL or less in concentration, and the amount of alcohol is 4-10% (v/v) in concentration.

EP 3 543 327 A1

**Description**

Technical Field

The present invention relates to a beer-like alcoholic beverage, and in particular relates to a beer-like alcoholic beverage in which the amount of digestible-carbohydrates has been reduced.

Background Art

"Beer" refers to a beverage obtained by fermenting malt, hops, water and the like as raw materials. "Beer-like" means that taste and flavor are similar to such an extent that they remind us of beer. "Alcoholic beverage" refers to a beverage containing ethyl alcohol in a substantial amount. In the Japanese Liquor Law, beverages which have an alcohol content by volume of 1% or more are regarded as liquors. These liquors are one example of alcoholic beverages. In the present specification, the term "alcohol" means ethyl alcohol.

Consumers' health consciousness in recent years increases demand for low-digestible-carbohydrate beer-like alcoholic beverages. However, digestible-carbohydrates are components that produce richness. In a beer-like alcoholic beverage having a reduced amount of digestible-carbohydrates, since there are fewer components that produce richness, a sensation of stimulation derived from alcohol is predominantly felt, thus having the problem that ease of drinking or preference decreases.

Patent Document 1 discloses that a polysaccharide thickener is included in a low-calorie alcoholic beverage to reduce pungent smell of alcohol without almost changing the design quality of the alcoholic beverage.

A polysaccharide thickener is poor in taste and flavor. Therefore, even if the polysaccharide thickener is added for reducing calories and the like after various nutritional components have been removed from the alcoholic beverage, flavors of the various reduced nutritional components cannot be compensated. For example, when the polysaccharide thickener is added to a low-digestible-carbohydrate alcoholic beer-like alcoholic beverage, the flavors decrease, and additionally, the sensation of stimulation also decreases, resulting in a poor balance of beer-like flavors.

Patent Document 2 discloses a non-fermented beer-like sparkling beverage which maintains "a likeness of beer", particularly beer-like foam retention, chromaticity and flavor. This non-fermented beer-like sparkling beverage includes a specific kind of flavor.

Patent Document 2, however, does not disclose any problems that the sensation of stimulation derived from alcohol adversely affects ease of drinking or preference of a beer-like alcoholic beverage.

Prior Art Documents

Patent Documents

Patent Document 1: JP 2011-142890 A
Patent Document 2: JP 2016-182134 A

Summary of Invention

Problem to be Solved by Invention

The present invention solves the above conventional problems, and an object thereof is to provide a beer-like alcoholic beverage with a reduced amount of digestible-carbohydrates, a reduced sensation of alcohol stimulation, and an excellent balance of beer-like flavors. Means for Solving Problem

The present invention provides a beer-like alcoholic beverage wherein the amount of 4-vinyl guaiacol (4VG) is 10-200 ppb (w/v) in concentration, the amount of 2-acetyl-1-pyrroline (2AP) is less than 1 ppb (w/v) in concentration, the amount of digestible-carbohydrates is 2.0 g/100 mL or less in concentration, and the amount of alcohol is 4-10% (v/v) in concentration.

In one embodiment, any of the above beer-like alcoholic beverages satisfies the relationship represented by the formula:

[Numerical Formula 1]

$$Y \geq -0.017X + 0.6 \quad (1)$$

wherein Y is the concentration of 2-acetyl-1-pyrroline (2AP) (ppb), and X is the concentration of 4-vinyl guaiacol (4VG) (ppb).

In one embodiment, the amount of digestible-carbohydrates in any of the beer-like alcoholic beverages is less than 0.5 g/100 mL.

In one embodiment, any of the above beer-like alcoholic beverages includes a component obtained from a fermented product of fermentation raw materials.

In one embodiment, any of the above beer-like alcoholic beverages includes a component obtained from grain or a component obtained from malt in the fermentation raw materials.

In one embodiment, the amount of alcohol in any of the above beer-like alcoholic beverages is 5-9% (v/v) in concentration.

Effect of Invention

By the present invention, a beer-like alcoholic beverage with a reduced amount of digestible-carbohydrates, a reduced sensation of alcohol stimulation, and an excellent balance of beer-like flavors was provided.

Brief Description of Drawing

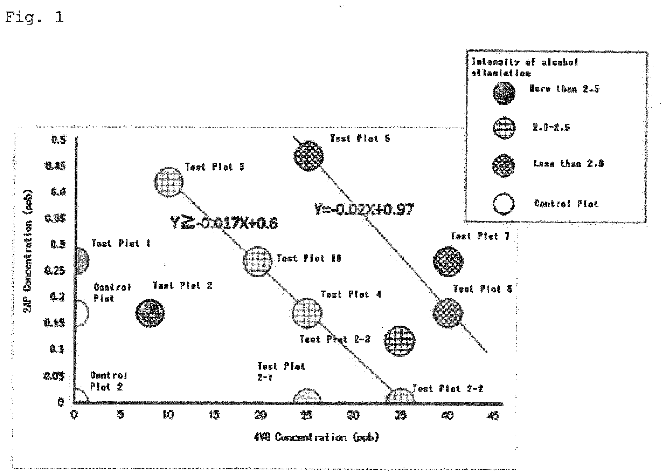

Fig. 1 is a graph in which the respective beverages produced in Examples 1-3 were plotted taking the 2AP concentration on the vertical axis and the 4VG concentration on the horizontal axis. Here, 2AP refers to 2-acetyl-1-pyroline, and 4VG refers to 4-vinyl guaiacol. Description of Embodiments

The beer-like alcoholic beverage refers to a beverage which is similar in its taste and flavor to a beer to such an extent that it reminds us of beer, and contains alcohol in a substantial amount. The beer-like alcoholic beverage may be produced using as raw materials malt, grain and hops, or may be produced not using them. Furthermore, the beer-like alcoholic beverage may be produced through a fermentation process or may be produced not through the fermentation process.

In the beer-like alcoholic beverage of the present invention, the amount of alcohol is 3% (v/v) or more in concentration. When the amount of alcohol is less than 3% in concentration, it becomes hard to feel the sensation of stimulation derived from alcohol when drinking. The amount of alcohol in the beer-like alcoholic beverage of the present invention is, for example, 4-10% in concentration, preferably 5-10% in concentration, more preferably 5-9% in concentration, and even more preferably 6-8%.

The amount of alcohol in the beer-like alcoholic beverage can be adjusted by a method which has conventionally been known. For example, when starch raw material and sugar raw material are fermented to produce a beer-like alcoholic beverage, the amount of alcohol in the beer-like alcoholic beverage may be adjusted by contriving brewing conditions such as increasing or decreasing the amounts of the starch raw material and the sugar raw material to be used. The amount of alcohol in the beer-like alcoholic beverage may also be adjusted by adding alcohols, drinking water or carbonated water to the beer-like alcoholic beverage.

The alcohols added to the beer-like alcoholic beverage are not particularly limited as long as they contain alcohol, and they may be raw material alcohol, or distilled liquors such as spirits, whisky, brandy, vodka, rum, tequila, gin, and *shochu.* The alcohols used in the present invention are preferably raw material alcohol, and distilled liquors such as vodka having a low characteristic flavor, since they can increase the alcohol concentration without affecting the taste of the beer-like alcoholic beverage very much, and more preferably raw material alcohol.

The beer-like alcoholic beverage of the present invention is a beer-like alcoholic beverage with a reduced amount of digestible-carbohydrates. The amount of digestible-carbohydrates in the beer-like alcoholic beverage of the present invention is 2.0 g/100 mL or less in concentration. When the amount of digestible-carbohydrates is more than 2.0 g/100 mL in concentration, richness comes out. Therefore, it becomes hard to feel the sensation of stimulation derived from alcohol when drinking. Furthermore, when the amount of digestible-carbohydrates is more than 2.0 g/100 mL in concentration, it cannot be said to be low digestible-carbohydrate, so that the consumers' demand cannot be met.

The amount of digestible-carbohydrates in the beer-like alcoholic beverage of the present invention is preferably 1.0 g/100 mL or less in concentration, and more preferably 0.5 g/100 mL or less in concentration. The amount of digestible-carbohydrates in the beer-like alcoholic beverage of the present invention can be adjusted by a method which has conventionally been known. The amount of digestible-carbohydrates in the beer-like alcoholic beverage can be determined by analyzing it according to a method described in Food Labeling Standards, Notification No. 139 on March 30, 2015 (JAPAN Consumer Agency).

The beer-like alcoholic beverage of the present invention can be produced, for example, by a method described below. A fermented beverage in the present specification means a beverage produced through a fermentation process of fermenting fermentation raw materials by yeast regardless of the kind of fermentation raw material. A fermented beer-like alcoholic beverage means a beverage produced through a fermentation process, and having a likeness to beer. Specifically, beer, *happoshu,* liqueur and the like are given. The beer-like alcoholic beverage in the present invention can also be produced by adding a flavoring and the like without going through the fermentation process.

The fermentation raw materials refer to raw materials of a beer-like beverage which can be fermented using yeast. In the fermentation raw materials, malt, grain and auxiliary materials are included. The auxiliary materials refer to raw materials other than malt and grain. Examples of the auxiliary materials include, for example, starch raw materials such as barley, wheat, corn starch, corn grits, rice and Karyan, and sugar raw materials such as liquid sugar and sugar. The liquid sugar is a product produced by decomposing, and saccharifying starch using an acid or a diastatic enzyme, and glucose, maltose, maltotriose and the like are mainly included.

A method of producing the fermented beverage has a fermentation process of inoculating yeast into a fermentation raw material liquid to ferment it. The alcohols can also be added to the fermentation raw material liquid before inoculation with yeast or the fermentation liquid during the fermentation process.

The amount of alcohols added to the fermentation raw material liquid and the like can be adjusted as needed, considering the intended product quality, in particular the intended alcohol concentration of the fermented beverage that is a final product. For example, the amount of alcohols added to the fermentation raw material liquid is preferably an amount in which the added alcohols increase the alcohol concentration of a fermented beverage to be produced by 1 vol% or more, and more preferably an amount which increases the alcohol concentration of the fermented beverage to be produced by 1-4 vol%.

The alcohols added to the fermented raw material liquid and the like are not particularly limited as long as they contain alcohol. For example, they may be raw material alcohol or may be distilled liquors such as spirits, whiskey, brandy, vodka, ram, tequila, gin and *shochu.* The alcohols used in the method of producing a fermented beverage according to the present invention are preferably raw material alcohol, and distilled liquors such as vodka having a low characteristic flavor, since they can increase the alcohol concentration without affecting the taste of the fermented beverage very much, and more preferably raw material alcohol.

In the method of producing a fermented beverage, the timing of adding the alcohols may be any time after a charging process. When the alcohols are added in the fermentation process, it is preferred that the fermentation proceeds sufficiently even after the addition of the alcohols since the added alcohols can be sufficiently blended into the fermentation liquid. Specifically, for example, the alcohols are preferably added so that the alcohol concentration of the fermentation liquid after addition of the alcohols increases by 1 volume or more than that of the fermentation liquid at the time of addition of the alcohols until completion of fermentation.

When the alcohols are added before the start of fermentation, after the alcohols have been added to and mixed with the fermentation raw material liquid, yeast may be inoculated thereinto. Alternatively, after yeast has been inoculated into the fermentation raw material liquid, the alcohols may be added to and mixed therewith, followed by the start of fermentation. Furthermore, the fermentation raw material liquid may be prepared by separating into a first liquid into which yeast is inoculated and a second liquid with which the alcohols are mixed, in advance, and mixed, followed by the start of fermentation. The first liquid containing the fermentation raw materials and the second liquid containing the fermentation raw materials and the alcohols are separately prepared. After yeast has been inoculated into the first liquid, a mixture obtained by mixing the first liquid and the second liquid containing the alcohols (fermentation raw material liquid into which yeast has been inoculated) is fermented.

In order to make it easier to mix the first liquid and the second liquid with each other, they are preferably prepared so that their specific gravities are substantially identical to each other. For example, the first liquid and the second liquid are preferably prepared so that a difference in specific gravity value between them is 0.017 or less, and more preferably 0.010 or less. It is also preferred that the specific gravity values of the first liquid and the second liquid are both in the range of 1.030 to 1.047.

In the specification of the present application, specific gravity values of liquids and fermentation raw material liquids are values measured at a liquid temperature of 20°C by a natural oscillation frequency measuring type density/specific gravity meter (e.g., "DA-510" manufactured by KYOTO ELECTRONICS MANUFACTURING CO., LTD.)

Each of the first liquid and the second liquid may be prepared by separating into two or more portions. When the first liquid is prepared by separating into two or more portions, yeast is inoculated into each liquid. When the first liquid and the second liquid are each prepared by separating into two or more portions, the first liquid and the second liquid are preferably charged in a fermentation tank alternatingly. By alternatingly charging the first liquid and the second liquid which have each been prepared by separating into two or more portions, both of them are easily mixed, thus becoming a homogeneous raw material fermentation liquid more quickly.

When the alcohols are added to the fermentation raw material liquid before inoculating yeast thereinto or the fermentation liquid during fermentation, fermentation stops earlier, which may result in insufficient fermentation. In the fermentation process, sufficient fermentation can be achieved by bubbling gas into the fermentation liquid even if the alcohols are added to the fermentation raw material liquid or the fermentation liquid during fermentation.

Although the gas used for bubbling is not particularly limited as long as it is gas, carbon dioxide gas, and nitrogen gas are preferred. Since the dissolved oxygen amount in the fermentation liquid can also be reduced by bubbling with carbon dioxide gas or nitrogen gas, the dissolved oxygen amount in a fermented beverage that is finally produced can also be reduced. That is, sufficient fermentation can be achieved by gas bubbling even if the alcohols are added, and in addition, a fermented beverage with high preservation stability and suppressed flavor deterioration can be produced.

Although conditions for bubbling can be determined as needed, considering the volume and the size of a container in which bubbling is performed, and the amount of the fermentation liquid included inside and the like, it is preferably performed under conditions where its flow rate is constant for a predetermined time. It is also preferably performed under conditions where foaming of the fermentation liquid is prevented by excessive bubbling. Specifically, for example, it can be performed at a flow rate of 2-55 L/min, preferably 2-20 L/min, per 3000 L of the fermentation liquid.

Since the dissolved oxygen in the fermentation liquid is reduced by gas bubbling, gas bubbling is preferably started after yeast growth in the fermentation liquid has stopped. The extent of yeast growth can be learned using as an index the floating yeast count in the fermentation liquid. The floating yeast count in the fermentation liquid increases during a period of active yeast growth, whereas after yeast growth has stopped, yeast settles down, and the floating yeast count in the fermentation liquid is also reduced. Therefore, gas bubbling into the fermentation liquid is preferably started after measuring the floating yeast count with time and confirming a peak of the floating yeast count.

When the fermented beverage produced by the method of producing a fermented beverage is a fermented beer-like alcoholic beverage, it can be produced in the same manner as in a general fermented beer-like alcoholic beverage except that the alcohols are added to the fermentation raw material liquid before inoculation with yeast or the fermentation liquid during the fermentation process. The general fermented beer-like alcoholic beverage can be produced through the processes of charging (preparation of a fermentation raw material liquid), fermentation, maturation, and filtration.

First, as the charging process (fermentation raw material liquid preparation process), fermentation raw material liquid is prepared from one or more selected from the group consisting of grain raw materials and sugar type raw materials. Specifically, a mixture comprising at least one of the grain raw materials and the sugar type raw materials, and raw material water is prepared, and warmed to saccharify starch such as grain raw material. As a raw material of a sugar solution, only grain raw material may be used, or only sugar type raw material may be used, or both may be used by mixing them. Examples of the grain raw materials include, for example, grains such as barley, wheat and malts thereof, rice, corn, beans such as soybeans, potatoes and the like. Although the grain raw material can also be used as grain syrup, grain extract and the like, it is preferably used as a grain crushed product obtained by subjecting it to crushing treatment. The crushing treatment of grains can be performed by a conventional method. Grain crushed products may be those which have been subjected to treatment commonly performed before or after the crushing treatment, such as a malt crushed product, corn starch, and corn grits. The grain crushed product used is preferably a malt crushed product. Using the malt crushed product can produce a fermented beer-like alcoholic beverage giving a clearer likeness to beer. Any malt crushed product may be used as long as it is obtained by germinating barley, for example two-rowed barley, by a conventional method, drying it and crushing it to a predetermined grain size. One grain raw material or a mixture obtained by mixing a plurality of grain raw materials may serve as the grain raw material used in the present invention. For example, a malt crushed product may be used as a main raw material, and a crushed product of rice or corn may be used as an auxiliary material. Examples of the sugar type raw materials include, for example, sugars such as liquid sugar.

Auxiliary materials other than the grain raw materials and the like and water may be added to the mixture. Examples of the auxiliary materials include, for example, hops, dietary fiber, yeast extract, fruit juice, a bittering agent, a colorant, a herb, a flavoring and the like. Also, as necessary, diastatic enzymes such as α-amylase, glucoamylase and pullanase, and an enzyme drug such as protease, can be added.

Saccharification treatment is carried out using an enzyme derived from grain raw material and the like, or an enzyme separately added. The time and temperature during the saccharification treatment is adjusted as needed considering the kind of grain raw material and the like used, percentage of grain raw materials accounting for total fermentation raw materials, kind of enzyme added and amount of the mixture, quality of the intended fermented beer-like alcoholic beverage and the like. For example, the saccharification treatment can be carried out by a conventional method such as holding a mixture containing the grain raw material and the like at 30-70°C for 20-90 minutes.

By boiling a sugar solution obtained after the saccharification treatment, syrup (a boiled product of the sugar solution) can be prepared. It is preferred that the sugar solution is filtered before boiling treatment, and that the resultant filtrate is subjected to the boiling treatment. In place of the filtrate of this sugar solution, malt extract added with warm water may also be used, followed by boiling. The boiling method and its conditions can be determined as needed.

A fermented beer-like alcoholic beverage with the desired flavor can be produced by adding a herb and the like as needed before the boiling treatment or during the boiling treatment. In particular, hops are preferably added before the boiling treatment or during the boiling treatment. The boiling treatment in the presence of hops can efficiently extract a flavor/aroma component. The amount of hops to be added, addition mode thereof (for example, added in several times and the like), and boiling conditions thereof can be determined as needed.

After the charging process and before the fermentation process, lees such as proteins produced by precipitation are preferably removed from the prepared syrup. Although the removal of lees may be performed by any solid-liquid separation treatment, generally, lees are removed using a tank called a whirlpool. The temperature of the syrup at this time may be 15°C or higher, and it is typically performed at a temperature of about 50-100°C. The syrup (filtrate) after the lees have been removed is cooled to an appropriate fermentation temperature by a plate cooler and the like. The syrup after the lees have been removed serves as a fermentation raw material liquid.

Next, as the fermentation process, yeast is inoculated into the cooled fermentation raw material liquid to carry out fermentation. The cooled fermentation raw material liquid may be provided to the fermentation process directly, or may be provided to the fermentation process after having been adjusted to the desired extract concentration. The yeast used for the fermentation is not particularly limited, and it is usually selected and used as needed from among those yeasts which are used for producing liquors. Although it makes no difference between top fermented yeast and bottom fermented yeast, bottom fermented yeast is preferred since it is easily applied to large-scale brewing equipment.

The yeast may be inoculated after the alcohols have been added to and mixed with the fermentation raw material liquid, or the alcohols may be added to and mixed with the fermentation raw material liquid inoculated with the yeast. The alcohols may be added after the fermetation raw material liquid has been inoculated with the yeast, followed by the fermentation. Furthermore, as described above, the fermentation may be started by mixing the alcohols with part of the fermentation raw material liquid, inoculating yeast into the remaining fermentation raw material liquid, and mixing both of them.

Furthermore, as the maturation process, the resultant fermented liquid is aged in a maturation tank and stored under a low-temperature condition of about 0°C to be stabilized. Thereafter, as the filtration process, the fermented liquid after maturation is filtered to remove the yeast, insoluble proteins and the like in this temperature range, thereby making it possible to obtain the intended fermented beer-like alcoholic beverage. This filtration treatment may be any method as long as it can remove the yeast by filtration, such as diatomaceous filtration, and filter filtration by a filter with an average pore size of about 0.4-0.6 μm.

In the method of producing a fermented beverage, the addition of the alcohols before completion of fermentation or after completion of fermentation can produce a fermented beverage having a high alcohol concentration even if the amount of fermentation raw materials to be used is small. That is, by using the method of producing a fermented beverage according to the present invention, even if the amount of fermentation raw materials to be used is suppressed so that the digestible-carbohydrate concentration in the final product is less than 0.5 g/100 mL, a fermented beer-like alcoholic beverage having a sufficiently high alcohol concentration can be produced.

The beer-like alcoholic beverage of the present invention contains 4-vinyl guaiacol (4VG). This increases the effect of reducing the sensation of alcohol stimulation. The amount of 4VG in the beer-like alcoholic beverage of the present invention is 10-200 ppb (w/v) in concentration. When the amount of 4VG is less than 10 ppb (w/v) in concentration, a reduction in the sensation of alcohol stimulation becomes insufficient. When it is more than 200 ppb, a balance of flavors may be lowered. The amount of 4VG in the beer-like alcoholic beverage of the present invention is, for example, 20-100 ppb in concentration, preferably 25-100 ppb in concentration, more preferably 25-80 ppb in concentration, and even more preferably 35-80 ppb in concentration.

The amount of 4VG in the beer-like alcoholic beverage can be measured, for example, by using a high-performance liquid-chromatography (HPLC) analysis method. For example, a sample obtained by ice-cooling beer-like alcoholic beverage followed by degassing is injected into a HPLC device to process it. An example of measurement conditions is as follows.

[Table 1]

| HPLC Device | "LC 1200" Series manufactured by Agilent Technologies, Inc. |
|---|---|
| UV Detector | Detection wavelength: 260 nm |
| Column | "Inertsil ODS-4" manufactured by GL Science, Inc. |
| Mobile phase | A: 0.2% aqueous solution of trifluoroacetic acid, B: aqueous solution of 0.2% trifluoroacetic acid in methanol |
| Flow rate | Gradient at 0.3 mL/min |
| Column temperature | 40°C |
| Injection volume | 40 μl |

For example, when starch raw material is fermented to produce a beer-like alcoholic beverage, the amount of 4VG in the beer-like alcoholic beverage may be adjusted by devising brewing conditions such as using malt as the starch raw material. The amount of 4VG in the beer-like alcoholic beverage may also be adjusted by adding a flavoring containing 4VG to the beer-like alcoholic beverage.

The beer-like alcoholic beverage preferably contains 2-acetyl-1-pyrroline (2AP). That increases the effect of reducing the sensation of alcohol stimulation. The amount of 2AP in the beer-like alcoholic beverage of the present invention is generally 1 ppb or less (w/v) in concentration. When the amount of 2AP is more than 1 ppb in concentration, a balance of flavors may become worse. The amount of 2AP in the beer-like alcoholic beverage of the present invention is preferably 0.12-0.67 ppb in concentration, more preferably 0.17-0.67 ppb in concentration, and even more preferably 0.17-0.47 ppb in concentration.

The amount of 2AP in the beer-like alcoholic beverage can be measured by a conventionally known method, for example, a method described in Iijuma et al., Journal of Applied Microbiology, 2010, Vol. 109, pp. 1906-1913. Specifically, a sample is collected in a container, TMP (2,4,6-trimethyl pyridine) is added and mixed, followed by filtration. Next, sodium hydroxide is added to the filtrate to make it alkaline, and dichloromethane is added thereto, followed by extraction with shaking. Thereafter, a solvent (dichloromethane) layer is recovered. The recovered solvent layer is dehydrated by adding anhydrous sodium sulfate, and then concentrated under reduced pressure to serve as a measurement sample. This measurement sample is subjected to capillary GC analysis with FID (Flame Ionization Detector) to detect 2-acetyl-1-pyrroline, and 2-propyl 1-pyrroline.

For example, when starch raw material is fermented to produce a beer-like alcoholic beverage, the amount of 2AP in the beer-like alcoholic beverage may be adjusted by devising brewing conditions such as using malt as the starch raw material. The amount of 2AP in the beer-like beverage may also be adjusted by adding a flavoring containing 2AP to the beer-like alcoholic beverage.

With respect to the beer-like alcoholic beverage, 4VG and 2AP may be used alone or in combination. The more efficient effect of reducing the sensation of alcohol stimulation is observed by their combined use, while keeping the balance of likeness to beer.

[Examples]

Next, the present invention will be described in more detail by showing Examples. However, it should not be construed that the present invention is limited to the following Examples and the like. 4-Vinyl guaiacol concentrations and 2-acetyl-1-pyrroline concentrations described in Examples and Reference Examples were measured by a method described in the detailed description of the invention.

<Example 1>

*Happoshu* (A beer-like fermented malt beverage ("ASAHI OFF" (trade name) manufactured by ASAHI BREWERIES, LTD.) made from malt extract, hops, sugars, a caramel coloring, dietary fiber, soybean protein, a seasoning (amino acid) and spirits (barley) as raw materials, and containing the following components) was obtained from the market. The digestible-carbohydrates of this beer-like alcoholic beverage are less than 0.5 g/100 mL, and the alcohol content is 3% (v/v).

[Table 2]

| Components (per 100 mL) | |
|---|---|
| Alcohol content (percentage) | 3% |
| Energy | 22 kcal |
| Protein | 0 g |
| Fat | 0 g |
| Digestible-carbohydrates | Less than 0.5 g |
| Dietary fiber | 1.4-2.1 g |
| Sodium | 0-8 mg |
| Purine bodies | Less than 0.5 g |

Raw material alcohol was added to the above beer-like fermented malt beverage to adjust the alcohol concentration of the beer-like fermented malt beverage to 6% (v/v). This served as a control beverage of Example 1.

An appropriate amount of a flavoring containing 4-vinyl guaiacol (4VG) or a flavoring containing 2-acetyl-1-pyrroline (2AP) was added to the control beverage to adjust the 4VG concentration or 2AP concentration (ppb (w/v)) of the beer-like malt beverage to amounts shown in Tables 3 and 4.

Sensory tests of the obtained beer-like fermented malt beverages were conducted in the following manner. That is, eight panelists expert in beers tasted the beer-like fermented malt beverages, and scored the sensation of alcohol stimulation and balance as a beer. For scoring criteria, the following criteria axis was adopted. An average value of the eight scores was adopted as an evaluation score.

The sensation of alcohol stimulation refers to a sinus-clearing flavor due to alcohol, irritation coming back to the nose, and irritation to the tongue.

Evaluation Axis: 1 (weak) -2 (a little weak) -3 (equivalent to control) -4 (a little strong) -5 (strong)

When the evaluation score was 2.5 or less, it was evaluated that there was an effect on inhibiting the sensation of alcohol stimulation, and when it was less than 2.0, it was evaluated that there was a marked effect on inhibiting the sensation of alcohol stimulation.

The balance as a beer means that the flavor is harmonious, and that it is easy to drink.

Evaluation Axis: 1 (poor) -2 (a little poor) -3 (equivalent to control) -4 (a little good) -5 (good)

When the evaluation score was 3.5 or more, it was evaluated that the balance as a beer has improved.

Furthermore, the panelists' comments regarding senses are summarized. Numerical values in the column show the numbers of those who pointed out the senses. The results are shown in Tables 3 and 4.

[Table 3]

| Test Plot | Control Plot | Test Plot 1 | Test Plot 2 | Test Plot 3 | Test Plot 4 |
|---|---|---|---|---|---|
| 4VG concentration (ppb) | 0 | 0 | 8 | 10 | 25 |
| 2AP concentration (ppb) | 0.17 | 0.27 | 0.17 | 0.42 | 0.17 |
| Intensity of alcohol stimulation | 3.0 | 3.0 | 3.3 | 2.1 | 2.1 |
| Balance as beer | 3.0 | 3.1 | 2.9 | 3.8 | 3.5 |
| Comments | | Alcohol 5, mild | Alcohol 4, acidity | Mild 2, grain | Mild, sweetness, acidity, alcohol |

[Table 4]

| Test Plot | Test Plot 5 | Test Plot 6 | Test Plot 7 | Test Plot 8 | Test Plot 9 | Test Plot 10 |
|---|---|---|---|---|---|---|
| 4VG concentration (ppb) | 25 | 40 | 40 | 100 | 200 | 20 |
| 2AP concentration (ppb) | 0.47 | 0.17 | 0.27 | 0.47 | 0.67 | 0.27 |
| Intensity of alcohol stimulation | 1.4 | 1.8 | 1.3 | 1.5 | 1.1 | 2.0 |
| Balance as beer | 4.5 | 4.3 | 4.5 | 4.0 | 3.0 | 3.8 |
| Comments | Grain 2, mild, harmonious | Sharp, lightness, acidity, harmonious | Grain 2, smoky, mild, harmonious, good balance | Sweetness, flat, sweet flavor | Grain, phenol 4, viscous 2, sweet flavor | Mild 3 |

<Example 2>

Carbon dioxide gas was added to raw material alcohol and a beer flavoring to prepare a beer-like alcoholic beverage with an alcohol concentration adjusted to 6%, and a digestible-carbohydrate concentration adjusted to less than 0.5 g/100 mL. This served as a control beverage (Control Plot 2) of Example 2.

An appropriate amount of a flavoring containing 4VG or a flavoring containing 2AP was added to the control beverage to adjust the 4VG concentration or 2AP concentration (ppb (w/v)) to amounts shown in Table 5. In the same manner as in Example 1, the sensation of alcohol stimulation and balance as a beer of the obtained beverage were evaluated. The results are shown in Table 5.

[Table 5]

| Test Plot | Control Plot 2 | Test Plot 2-1 | Test Plot 2-2 | Test Plot 2-3 |
|---|---|---|---|---|
| 4VG concentration (ppb) | 0 | 25 | 35 | 35 |
| 2AP concentration (ppb) | 0 | 0 | 0 | 0.12 |
| Intensity of alcohol stimulation | 3.0 | 2.6 | 2.1 | 2.0 |
| Balance as beer | 3.0 | 3.4 | 3.8 | 4.0 |
| Comments | | Alcohol, watery | Phenol 2 | Grain, richness |

Fig. 1 is a graph in which the respective beverages produced in Examples 1 and 2 were plotted taking the 2AP concentration on the vertical axis and the 4VG concentration on the horizontal axis. That is, the plotted beverages are Control Plot, and Test Plots 1-7, 10 of Example 1, and Control Plot 2, Test Plots 2-1, 2-2 and 2-3 of Example 2. From the graph of Fig. 1, it is understood that the beverages of the test plots that are beer-like alcoholic beverages with a reduced sensation of alcohol stimulation of the present invention contain a predetermined amount of 4VG, and contain 2AP as necessary, and in particular, satisfy the formula:
[Numerical Formula 2]

$$Y \geq -0.017X + 6 \qquad (1)$$

wherein Y is the concentration of 2-acetyl-1-pyrroline (2AP) (ppb), and X is the concentration of 4-vinyl guaiacol (4VG) (ppb).

Also, it is understood that, among the beverages of the test plots, those which are particularly superior in effect of reducing the sensation of alcohol stimulation satisfy the formula:
[Numerical Formula 3]

$$Y \geq -0.02X + 0.97 \qquad (2)$$

wherein Y and Z are as defined above.

<Example 3>

A beer-like fermented malt beverage that was the same as Example 1 (digestible-carbohydrate concentration of less than 0.5 g/100 mL, alcohol content of 3%) was obtained from the market. Raw material alcohol was added to the beer-like fermented malt beverage to adjust the alcohol concentration of the beer-like fermented malt beverage to amounts shown in Tables 6 and 7. These served as control beverages of Example 3.

A flavoring containing 4VG and 2AP was added to the control beverages to adjust the 4VG and 2AP concentrations of beer-like fermented malt beverages to 40 ppb and 0.27 ppb, respectively. In the same manner as in Example 1, the sensation of alcohol stimulation and balance as a beer of the obtained beverages were evaluated. A comparison was made on each pair with the same alcohol content. That is, for example, a beverage in which a flavoring was added to a control beverage with a 3% alcohol control beverage was compared as a test beverage with a 3% alcohol control beverage. The results are shown in Tables 6 and 7.

[Table 6]

| Test Plot | Control Plot A | Test Plot A | Control Plot B | Test Plot B | Control Plot C | Test Plot C | Control Plot D | Test Plot D |
|---|---|---|---|---|---|---|---|---|
| Alcohol content (%) | 3 | 3 | 5 | 5 | 7 | 7 | 9 | 9 |
| 4VG concentration (ppb) | 0 | 40 | 0 | 40 | 0 | 40 | 0 | 40 |
| 2AP concentration (ppb) | 0.17 | 0.27 | 0.17 | 0.27 | 0.17 | 0.27 | 0.17 | 0.27 |
| Intensity of alcohol stimulation | 3.0 | 3.0 | 3.0 | 1.8 | 3.0 | 1.6 | 3.0 | 1.8 |
| Balance as beer | 3.0 | 3.3 | 3.0 | 4.0 | 3.0 | 4.1 | 3.0 | 4.0 |
| Comments | | Watery, astringency | | Phenol 2 | | Grain | | Grain |

[Table 7]

| Test Plot | Control Plot E | Test Plot E | Control Plot F | Test Plot F | Control Plot G | Test Plot G |
|---|---|---|---|---|---|---|
| Alcohol content (%) | 11 | 11 | 4 | 4 | 10 | 10 |
| 4VG concentration (ppb) | 0 | 40 | 0 | 40 | 0 | 40 |
| 2AP concentration (ppb) | 0.17 | 0.27 | 0.17 | 0.27 | 0.17 | 0.27 |
| Intensity of alcohol stimulation | 3.0 | 3.0 | 3.0 | 1.8 | 3.0 | 2.2 |
| Balance as beer | 3.0 | 2.9 | 3.0 | 4.0 | 3.0 | 4.0 |
| Comments | | Alcohol 4 | | Phenol | | Grain |

It was observed that 4VG and 2AP had an effect of inhibiting the sensation of alcohol stimulation in a specific range of alcohol concentration.

<Example 4>

A beer-like fermented malt beverage that was the same as Example 1 (digestible-carbohydrate concentration of less than 0.5 g/100 mL, alcohol content of 3%) was obtained from the market. Raw material alcohol was added to the beer-like fermented malt beverage to adjust the digestible-carbohydrate concentration of the beer-like fermented malt beverage to 6%, and hydrolysates of starch with a DE of 11.8 ("Pindex #2" (trade name) manufactured by Matsutani Chemical industry, Co., Ltd.) were added to adjust the digestible-carbohydrate concentrations as shown in Table 8. Pinedex #2 was added as an aqueous solution, whose concentration had been adjusted as needed so that the volume to be added to each sample was the same. These served as control beverages of Example 4.

A flavoring containing 4VG and 2AP was added to the control beverages to adjust the 4VG and 2AP concentrations of the beer-like fermented malt beverage to 20 ppb and 0.27 ppb, respectively. In the same manner as in Example 1, the sensation of alcohol stimulation and balance as a beer of the obtained beverages were evaluated. A comparison was made on each pair with the same digestible-carbohydrate concentration. That is, for example, a beverage in which a flavoring was added to a beverage with a digestible-carbohydrate concentration of 0.3% was compared as a test beverage with a control beverage with a digestible-carbohydrate concentration of 0.3%. The results are shown in Table 8.

[Table 8]

| Test Plot | Control Plot H | Test Plot H | Control Plot I | Test Plot I | Control Plot J | Test Plot J | Control Plot K | Test Plot K |
|---|---|---|---|---|---|---|---|---|
| Digestible-carbohydrate concentration (g/100 mL) | 0.3 | 0.3 | 0.8 | 0.8 | 1.6 | 1.6 | 3.2 | 3.2 |
| 4VG concentration (ppb) | 0 | 20 | 0 | 20 | 0 | 20 | 0 | 20 |
| 2AP concentration (ppb) | 0.17 | 0.27 | 0.17 | 0.27 | 0.17 | 0.27 | 0.17 | 0.27 |
| Intensity of alcohol stimulation | 3.0 | 1.8 | 3.0 | 2.0 | 3.0 | 2.4 | 3.0 | 2.8 |
| Balance as beer | 3.0 | 3.8 | 3.0 | 3.8 | 3.0 | 3.5 | 3.0 | 2.4 |
| Comments | | Mild 3 | | | | | Body 2 | Paper smell 5 |

It was observed that 4VG and 2AP had an effect of inhibiting the sensation of alcohol stimulation in a specific range of digestible-carbohydrate concentration.

**Claims**

1. A beer-like alcoholic beverage wherein the amount of 4-vinyl guaiacol (4VG) is 10-200 ppb (w/v) in concentration, the amount of 2-acetyl-1-pyrroline (2AP) is less than 1 ppb (w/v) in concentration, the amount of digestible-carbohydrates is 2.0 g/100 mL or less in concentration, and the amount of alcohol is 4-10% (v/v) in concentration.

2. The beer-like alcoholic beverage according to claim 1, which satisfies the relationship represented by the formula:
[Numerical Formula 1]

$$Y \geq -0.017X + 0.6 \quad (1)$$

wherein Y is the concentration of 2-acetyl-1-pyrroline (2AP) (ppb), and X is the concentration of 4-vinyl guaiacol (4VG) (ppb).

3. The beer-like alcoholic beverage according to claim 1 or 2, wherein the amount of digestible-carbohydrates is less than 0.5 g/100 mL.

4. The beer-like alcoholic beverage according to any one of claims 1-3, which includes a component obtained from a fermented product of fermentation raw materials.

5. The beer-like alcoholic beverage according to claim 4, which includes a component obtained from grain or a component obtained from malt in the fermentation raw materials.

6. The beer-like alcoholic beverage according to any one of claims 1-5, wherein the amount of alcohol is 5-9% (v/v) in concentration.

Fig. 1

## INTERNATIONAL SEARCH REPORT

| International application No. |
| --- |
| PCT/JP2017/040251 |

**A. CLASSIFICATION OF SUBJECT MATTER**
Int.Cl. C12G3/04(2006.01)i, A23L2/00(2006.01)i, C12C5/02(2006.01)i

According to International Patent Classification (IPC) or to both national classification and IPC

**B. FIELDS SEARCHED**

Minimum documentation searched (classification system followed by classification symbols)
Int.Cl. C12G3/04, A23L2/00, C12C5/02

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JST7580(JDreamIII), CAplus/FSTA/BIOSIS(STN), DWPI(Thomson Innovation)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014/119065 A1 (ASAHI BREWERIES, LTD.) 07 August 2014, claims, paragraphs [0008], [0051], table 3 & JP 2014-195475 A & CN 104812886 A & KR 10-2015-0110465 A & TW 1430125 A | 1-6 |
| A | JP 2013-201976 A (ASAHI BREWERIES, LTD.) 07 October 2013, entire document (Family: none) | 1-6 |
| A | JP 5911647 B1 (OGAWA & CO., LTD.) 08 April 2016, entire text & WO 2017/010000 A1 | 1-6 |
| A | JP 2016-15935 A (ASAHI BREWERIES, LTD.) 01 February 2016, entire text & WO 2016/006340 A1 & TW 1601641 A | 1-6 |
| A | JP 2014-128251 A (SUNTORY HOLDINGS LTD.) 10 July 2014, entire text (Family: none) | 1-6 |

☒ Further documents are listed in the continuation of Box C.  ☐ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 01 February 2018 (01.02.2018) | 13 February 2018 (13.02.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2017/040251

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-119841 A (ASAHI BREWERIES, LTD.) 07 July 2016, entire text (Family: none) | 1-6 |
| A | WO 2015/060008 A1 (SAPPORO BREWERIES LTD.) 30 April 2015, entire text & JP 2015-107100 A & JP 2015-107104 A & JP 2015-107107 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011142890 A

- JP 2016182134 A

**Non-patent literature cited in the description**

- Food Labeling Standards, Notification No. 139. JA-PAN Consumer Agency, 30 March 2015

- **IIJUMA et al.** *Journal of Applied Microbiology,* 2010, vol. 109, 1906-1913